# EUROPEAN PATENT APPLICATION

(11) **EP 1 632 647 A1**
(43) Date of publication of application: **08.03.2006**
(21) Application number: 04425656.8
(22) Date of filing: 01.09.2004
(51) Int. Cl.: F01D 1/32, F01D 1/24, F02C 3/16, F02K 7/00

(54) **Rotary combustion engine system and its applications**

(71) Applicant: C.R.F. Società Consortile per Azioni, 10043 Orbassano (TO) (IT)
(72) Inventor: Perlo, Pietro, 10043 Orbassano (Torino) (IT)
(74) Representative: Quinterno, Giuseppe

(57) **Abstract**

The system (1) comprises a stationary structure, and a rotor structure (3), supported by the stationary structure in such a way that it can rotate about an axis (4) by means of contactless suspension devices, and comprising a central hub (5) to which is connected a plurality of combustors (6) positioned at angular intervals around the said axis (4) in an essentially ring-shaped overall configuration.

Each combustor device (6) comprises a tubular body (9), having a first closed end (9a) into which extends a fuel and comburent injector (10) and an associated igniter (11), and having a second nozzle-shaped open end (9b) for ejecting the gases produced in the combustion in a direction forming an angle greater than or equal to 90° with respect to the local radial direction, relative to the said axis (4).

The combustor devices (6) are positioned in a single direction around the axis (4), in such a way that the gases produced in the combustion in each device can impart a thrust to the rotor structure (3) in the same direction of rotation.

## Description

The present invention relates to a rotary combustion engine, for use in particular for driving an electrical generating machine such as a dynamo in a thermoelectric power plant, and for other applications.

The rotary combustion engine system according to the invention is essentially characterized in that it comprises:
a stationary structure,
a rotor structure, supported by the stationary structure in such a way that it can rotate about an axis by means of contactless suspension means, and comprising a central hub which is rotatable about the said axis and to which is connected a plurality of combustor devices positioned at angular intervals around the said axis in an essentially ring-shaped overall configuration;
each combustor device comprising a tubular body, having a first closed end into which extend means for injecting fuel and comburent and associated ignition means, and having a second nozzle-shaped open end for ejecting gases produced in the combustion in a direction forming an angle greater than or equal to 90° with respect to the local radial direction, relative to the said axis;
the said injector means being connected to fuel and comburent conveying means which extend between the combustor device and the said hub, and which are fixed to the rotor structure with respect to rotation; the said conveying means being capable of receiving, in operation, a supply of fuel and comburent at the said hub;
the combustor devices being positioned in a single direction around the said axis, in such a way that the gases produced in the combustion in each device can impart a thrust to the rotor structure in the same direction of rotation.

Conveniently, in one embodiment, the ejection nozzle ends of the combustors extend into corresponding converging tubular elements, forming what is known as an "augmented thrust" system in combination with these elements.

The rotor structure can conveniently be connected to permanent magnets for inducing electromotive forces in associated stator windings fixed to the said stationary structure.

In one application, a bladed turbine is mounted around the aforesaid rotor structure and is supported by the aforesaid stationary structure so that it can rotate about the aforesaid axis by means of contactless suspension means, in such a way that the gases ejected by the aforesaid combustor devices strike the blades of this turbine in operation, thus rotating the turbine in a direction opposite to the direction of rotation of the rotor structure.

In one embodiment, the turbine also conveniently carries permanent magnets for inducing electromotive forces in associated stator windings fixed to the stationary structure.

Further characteristics and advantages of the invention will be made clear by the following detailed description, provided purely by way of example and without restrictive intent, with reference to the attached drawings, in which:
Figure 1 is a plan view from above of a rotary combustion engine system according to the present invention;
Figure 2 is a partial view of a section taken essentially along the line II-II of Figure 1;
Figure 3 is a plan view from above of a rotary combustion engine device according to the invention, with an associated turbine shown in a sectional view taken essentially through an equatorial plane;
Figure 4 is a partial view of a section taken essentially along the line IV-IV of Figure 3;
Figure 5 is a view similar to that shown in Figure 3, and shows a variant embodiment; and
Figure 6 is a partial view of a section taken essentially along the line VI-VI of Figure 5.

In the drawings, the number 1 indicates the whole of a rotary combustion engine system according to the present invention.

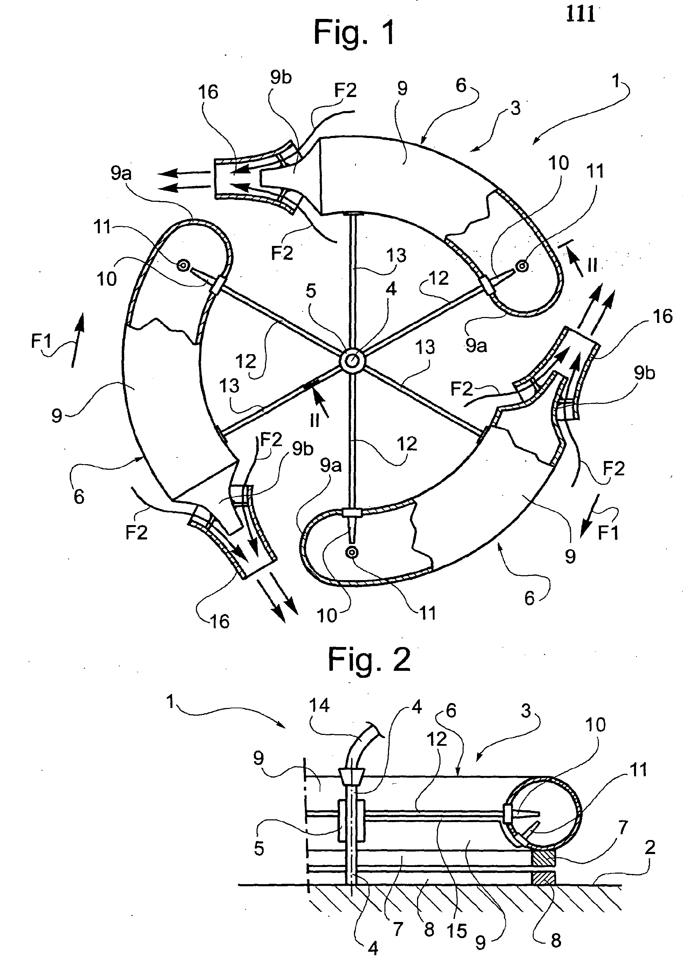

This rotary engine system comprises a stationary structure, represented schematically in Figure 2 and indicated there by 2.

In the embodiment shown by way of example, the rotary engine system 1 comprises a rotor structure 3 supported by the stationary structure 2 in such a way that it can rotate about an axis 4 by means of contactless suspension means which are described below.

The rotor structure 3 comprises a central hub 5 rotatable about the axis 4. This hub is connected to a plurality of curved combustor devices 6, spaced at equal angular intervals about the axis 4, in an essentially ring-shaped overall configuration.

In the illustrated example of embodiment, the contactless suspension means comprise curved permanent magnets 7, fixed to the combustor devices 6, magnetized in a direction parallel to the axis 4, with their lower parts having the same magnetic polarity, of the "south" type for example.

The magnets 7 fixed to the combustor devices 6 face a corresponding ring magnet 8 fixed to the stationary structure 2 (Figure 2). The annular magnet 8 is also magnetized parallel to the axis 4, and its upper part has a polarity, of the "south" type for example, identical to that of the magnets 7 facing it. Consequently there is a repulsive effect between the magnets 7 and 8.

The magnetic suspension arrangement described above is simple and schematic and is described purely for guidance. Contactless suspension systems, particularly of the magnetic type, produced by any one of various known methods can be used for the suspension of the rotor structure 3 with respect to the stationary structure 2.

Further examples of methods for producing contactless suspensions, particularly of the magnetic type, are described in the preceding Italian patent application no. TO2003A000588 filed on behalf of the present applicant on 30 July 2003, relating to a "Flying machine".

With reference to Figure 1 in particular, each combustor device 6 comprises a curved tubular body 9, with a first end 9a which is closed, and a second end 9b which is open and shaped in the form of a nozzle.

The closed end 9a of each combustor can have a smooth internal surface orthogonal to the longitudinal axis of the combustor, although this is not illustrated, to maximize the thrust developed by the combustion gases during operation.

An injector 10 for the injection of fuel and comburent, and an associated ignition device 11, extend into the closed end 9a of the body 9 of each combustor device. These devices are known.

The outlet end 9b of the body 9 of each combustor device 6 is shaped in the form of a nozzle to emit the gases produced in the combustion during operation. Conveniently, this nozzle-shaped end 9b of each combustor device is orientated in such a way as to emit the gases in a direction forming an angle greater than or equal to 90° with respect to the local radial direction relative to the axis 4.

The drawings show curved combustors 9, but it is also possible to use similar combustors which are linear, or rectilinear, and positioned for example in directions forming chords or quasi-chords relative to a circumference centred on the axis 4. In this case, the magnets 7 associated with these combustors can have correspondingly linear shapes.

With reference to Figures 1 and 2, the bodies 9 of the combustor devices 6 are connected to a plurality of spokes 12, 13, interconnected centrally with the hub 5 which is rotatable about the axis 4.

In the embodiments shown by way of example in Figures 1 to 4, the spokes 12 alternate with the spokes 13. The spokes 12 are joined to the bodies 9 of the combustor devices 6 at the positions of the associated injector devices 10. These spokes 12, conveniently made in a tubular shape, act as passages to convey fuel and comburent between the hub 5 and the injectors 10. The hub 5 is conveniently made hollow, and during operation receives a flow of fuel and comburent through a duct 14 (Figure 2) joined to the axis 4 and also made at least partially in tubular shape. Known sealing devices are provided between the hub 5 and the axis 4 to prevent the loss of fuel and comburent to the exterior. Additionally, electrically operated valve devices can be provided in the hub 5, although this is not illustrated, for controlling the selective supply of a flow of fuel and comburent to each of the combustor devices 6.

Conveniently, the ignition device 11 of each combustor 6 is connected to a corresponding electrical power supply and/or control line 15 (Figure 2) which extends along the associated spoke 12 through which the fuel and comburent are conveyed to the associated injector device 10. This electrical power supply and/or control line 15 is connected inside the hub (in a way which is not shown) to a corresponding stationary electrical line which extends in the axis 4. The connection can be made by means of known devices such as ring collectors and associated brushes, or by means of inductive coupling devices.

The combustor devices 6, as shown in Figure 1, are orientated in the same direction about the axis 4 in such a way that the gases produced in the combustion in each device can impart to the whole rotor structure 3 a thrust in the direction of rotation indicated by the arrows F1.

The fuel and comburent injected into each combustor 6 can be, for example, hydrogen and oxygen, or, more generally, hydrocarbons and combinations of them, including nanoparticles catalyzing the combustion process or particles for increasing the specific energy of the comburent, and air, compressed if necessary.

Conveniently, in order to ensure that the combustion reaction in each combustor 6 takes place by detonation or continuous rapid deflagration rather than by simple deflagration, the length of the body 9 of each combustor is greater than or equal to approximately 40 times the average transverse (internal) dimension, and is preferably in the range from 40 to 100 times this average transverse dimension. The schematic representations provided in the drawings are purely for guidance and should not be interpreted as accurate reflections of the dimensional relationships.

Roughened areas for creating turbulence in the flame propagation front can be provided inside the combustors 6.

Conveniently, the nozzle ends 9b of the combustors extend into corresponding converging tubular elements 16, forming what is known as an "augmented thrust" system in combination with these elements. Because of the presence of these converging tubular elements 16, a flow of air is drawn, during operation, into the space formed between these elements 16 and the nozzle ends 9b of the combustor devices, as indicated by the arrows F2 in Figure 1. This flow of air causes a marked cooling of the exhaust gases flowing from each nozzle 9b, and a corresponding increase in their speed and in the thrust which is accordingly developed.

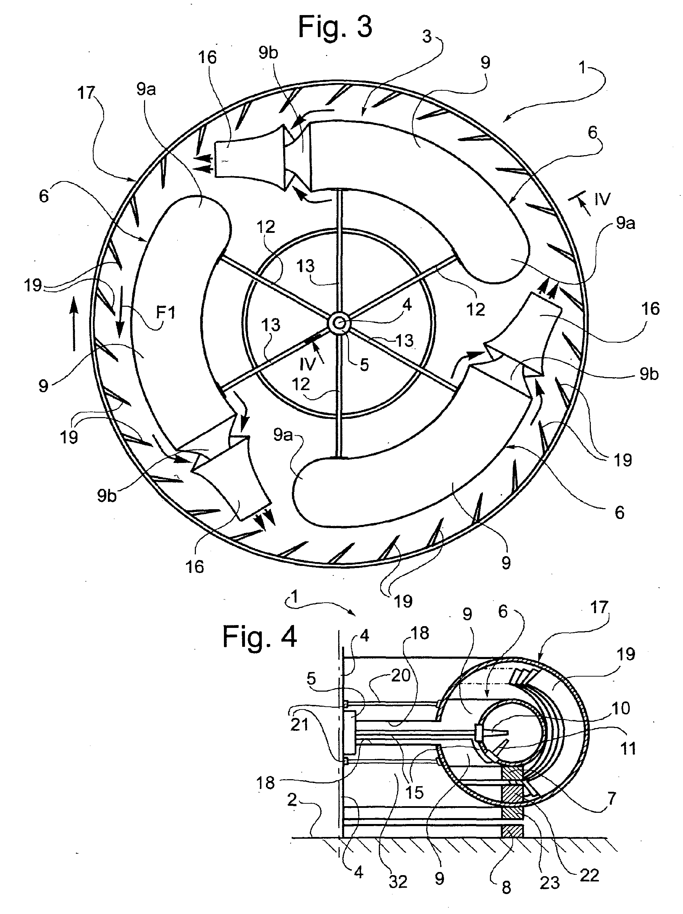

Figures 3 and 4 show an embodiment in which a rotary combustion engine system of the type described above is connected to an annular turbine 17. In Figures 3 and 4, parts and elements identical or essentially equivalent to components described previously have been given the same reference numerals as those used before.

The turbine 17 of Figures 3 and 4 is essentially shaped in the form of a tubular torus of circular section, with an equatorial slit or slot 18 in its internal circumference (minimum circumference). Internally, in the portion of its wall having the greatest diameter, the turbine 17 carries a plurality of blades 19, which are struck in operation by the flows of exhaust gases ejected by the combustor devices 6.

The turbine 17 is supported rotatably about the axis 4 by means of a plurality of spokes 20 which interconnect it with one or more hubs 21 which are rotatable about the said axis.

The turbine 17 is supported by contactless suspension means. In the illustrated embodiment, the turbine carries a permanent ring magnet 22 inside it, and an external permanent ring magnet 23. Both of these magnets are magnetized parallel to the axis 4, and have polarities facing the magnets 7 and 8 such that a repulsive effect is created.

In operation, the interaction between the gases ejected from the combustor devices 6 and the blades 19 of the turbine 17 is such that the turbine rotates in a direction opposite to the direction of rotation of the rotor structure 3.

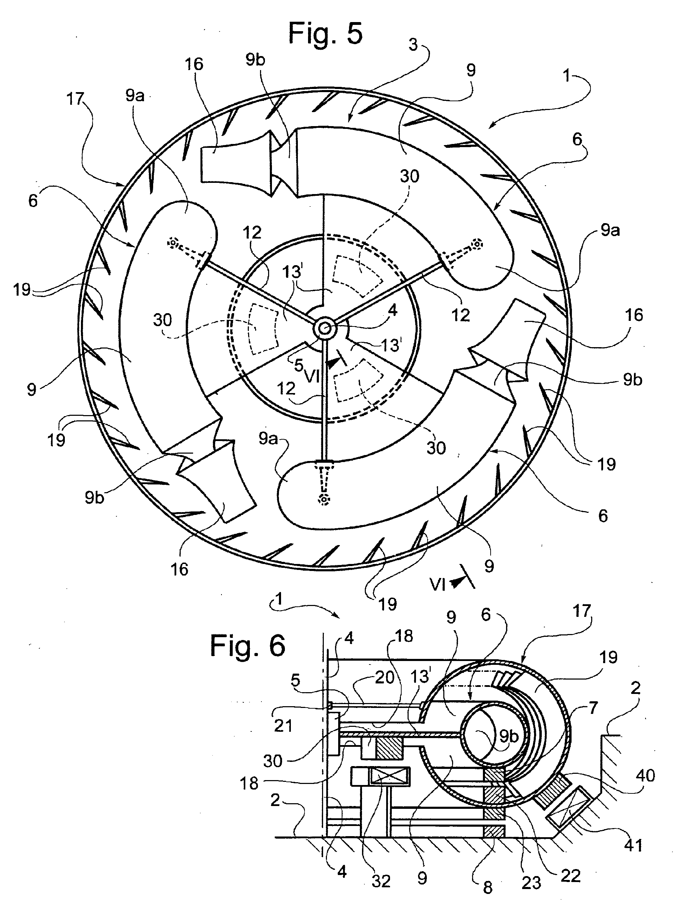

Figures 5 and 6 show a variant embodiment of the system shown in Figures 3 and 4. In Figure 5, the same reference numerals as those used before have again been given to parts and elements described previously.

With reference to Figure 5, the rotor structure which comprises the combustor devices 6 has, in addition to the spokes 12 which act as passages for the supply of fuel and comburent, a plurality of spokes 13' essentially shaped as circular sectors. The lower faces of these spokes are connected to corresponding permanent magnets indicated by 30, which extend beyond the turbine 17, and which, in operation, can induce electromotive forces in associated stator windings 31 (Figure 6) fixed to the stationary structure 2.

The permanent magnets can also be associated with the rotor structure 3 in the embodiments shown in Figures 1 to 4.

In the embodiment shown in Figures 5 and 6, the turbine 17 also carries external permanent magnets 40 for inducing electromotive forces in associated stator windings 41 fixed to the stationary structure 2 (Figure 6).

Clearly, provided that the principle of the invention is retained, the forms of application and the details of construction can be varied widely from what has been described and illustrated purely by way of example and without restrictive intent, without thereby departing from the scope of protection of the invention as defined by the attached claims.

## Claims

1. Rotary combustion engine system (1) comprising
a stationary structure (2),
a rotor structure (3), supported by the stationary structure (2) in such a way that it can rotate about an axis (4) by means of contactless suspension means (7, 8), and comprising a central hub (5) which is rotatable about the said axis (4) and to which is connected a plurality of combustor devices (6) positioned at angular intervals around the said axis (4) in an essentially ring-shaped overall configuration;
each combustor device (6) comprising a tubular body (9), having a first closed end (9a) into which extend means for injecting fuel and comburent (10) and associated ignition means (11), and having a second nozzle-shaped open end (9b) for ejecting gases produced in the combustion in a direction forming an angle greater than or equal to 90° with respect to the local radial direction, relative to the said axis (4);
the said injector means (10) being connected to fuel and comburent conveying means (12) which extend between the combustor (6) and the said hub (5), and which are fixed to the rotor structure (3) with respect to rotation; the said conveying means (12) being capable of receiving, in operation, a supply of fuel and comburent at the said hub (5) ;
the combustor devices (6) being positioned in a single direction around the said axis (4), in such a way that the gases produced in the combustion in each device can impart a thrust to the rotor structure (3) in the same direction of rotation.

2. System according to Claim 1, in which the ignition means (11) associated with each combustor device (6) are of the electrical type and are connected to an electrical power supply and/or control line (15) which extends between the combustor device (6) and the aforesaid hub (5) and which rotates, in operation, in a fixed way with respect to the rotor structure (3) and can receive power supply and/or control voltages at the said hub (5).

3. System according to Claim 1 or 2, in which the said means of conveying fuel and comburent (12) are incorporated in spokes which interconnect the combustor devices (6) and the hub (5).

4. System according to Claim 2 and 3, in which the said power supply and control lines (15) extend along the said interconnecting spokes (12).

5. System according to any one of the preceding claims, in which the nozzle ends (9b) of the combustor devices (6) extend into corresponding converging tubular elements (16), forming what is known as an "augmented thrust" system in combination with these elements.

6. System according to any one of the preceding claims, in which roughened areas for inducing turbulence are provided inside each combustor (6).

7. System according to any one of the preceding claims, in which the tubular body (9) of each combustor has inside it, near the closed end (9a), a flat surface orthogonal to the longitudinal axis of the combustor (6).

8. System according to any one of the preceding claims, in which each of the said combustors (6) comprises a curved tubular body (9).

9. System according to any one of Claims 1 to 7, in which each of the said combustors (6) comprises a linear or rectilinear tubular body (9).

10. System according to any one of the preceding claims, in which the rotor structure (3) carries permanent magnets (30) for inducing electromotive forces in associated stator windings (32) fixed to the said stationary structure.

11. System according to any one or more of the preceding claims, in which a bladed turbine (17) is mounted around the rotor structure (3) and is supported by the said stationary structure (2) in such a way that it can rotate about the said axis (4) by means of contactless suspension means (7, 8; 22, 23); the arrangement being such that the gases ejected by the said combustor devices (6) strike the blades (19) of the turbine (17) during operation, causing the turbine to rotate in the opposite direction to the direction of rotation of the rotor structure (3).

12. System according to Claim 11, in which the turbine (17) has a tubular toroidal shape and has a circumferential slot (18) through which extend means (12, 13; 13') for connecting the rotor (3) to the aforesaid hub (5) and the aforesaid means of conveying fuel and comburent (12).

13. System according to Claim 11 or 12, in which the turbine (17) carries permanent magnets (40) for inducing electromotive forces in associated stator windings (41) fixed to the said stationary structure (2).
